# EUROPÄISCHE PATENTSCHRIFT

(11) **EP 3 097 506 B1**
(45) Veröffentlichungstag und Bekanntmachung des Hinweises auf die Patenterteilung: **13.12.2017**
(21) Anmeldenummer: 15721148.3
(22) Anmeldetag: 23.04.2015
(51) Int. Cl.: H04L 12/24, H04L 29/06, G06F 21/55, G06F 11/30

(54) **VERFAHREN UND SYSTEM ZUR GEWINNUNG UND ANALYSE VON FORENSISCHEN DATEN IN EINER VERTEILTEN RECHNERINFRASTRUKTUR**
METHOD AND SYSTEM FOR OBTAINING AND ANALYSING FORENSIC DATA IN A DISTRIBUTED COMPUTER INFRASTRUCTURE
PROCÉDÉ ET SYSTÈME D'OBTENTION ET D'ANALYSE DE DONNÉES FORENSIQUES DANS UNE INFRASTRUCTURE INFORMATIQUE DISTRIBUÉE

(30) Priorität: 16.06.2014 DE 102014211504
(43) Veröffentlichungstag der Anmeldung: 30.11.2016
(73) Patentinhaber: Siemens Aktiengesellschaft, 80333 München (DE)
(72) Erfinder: BUSSER, Jens-Uwe, 85579 Neubiberg (DE); CUELLAR, Jorge, 82065 Baierbrunn (DE); MUNZERT, Michael, 82166 Gräfelfing (DE); PATZLAFF, Heiko, 80799 München (DE); STIJOHANN, Jan, 81825 München (DE)
(86) Internationale Anmeldenummer: PCT/EP2015/058815
(87) Internationale Veröffentlichungsnummer: WO 2015/193007

(56) Entgegenhaltungen:
- US-A1- 2003 097 617
- US-A1- 2009 164 522
- Rodrigo Chandia ET AL: "Security Strategies for SCADA Networks" In: "Critical Infrastructure Protection", 1. Januar 2007 (2007-01-01), Springer US, Boston, MA, XP055202461, ISBN: 978-0-38-775461-1 Bd. 253, Seiten 117-131, DOI: 10.1007/978-0-387-75462-8_9, das ganze Dokument

## Beschreibung

Die Erfindung bezieht sich auf ein Verfahren und eine Vorrichtung zur Gewinnung und Analyse von forensischen Daten in einer verteilten Rechnerinfrastruktur mit mehreren Rechenvorrichtungen und mindestens einer Überwachungseinheit, die über ein Kommunikationsnetz miteinander verbunden sind.

In Industrieanlagen, wie beispielsweise Automationsanlagen zur Fertigung von Wirtschaftsgütern oder Anlagen zur Erzeugung von Energie oder auch Energieverteilungssystemen sind Rechenvorrichtungen, wie z.B. sogenannte Feldgeräte oder sonstige Steuereinrichtungen durch ein Kommunikationsnetz miteinander verbunden. Über dieses Kommunikationsnetz werden Mess- und Steuerungsdaten zwischen den Rechenvorrichtungen ausgetauscht oder auch Steuerungs- oder Administrationsnachrichten von einer übergeordneten Steuerungsebene an die einzelnen Rechenvorrichtungen verteilt. Sicherheitsereignis-Management- und Sicherheitsinformations-Monitoring-Systeme werden verwendet, um auch in solchen verteilten Rechnerinfrastrukturen anfallende Sicherheitsprotokolldaten zentral zu speichern und zu verwalten. Durch die Analyse dieser Daten werden sicherheitsrelevante Ereignisse erkannt und an ein Überwachungszentrum gemeldet.

Typische Beispiele für solche sicherheitsrelevanten Ereignisse sind fehlgeschlagene Anmeldeversuche, Verbindungen von einem Rechner zu "bösartigen" oder "verdächtigen" Websites, von einer Rechenvorrichtung ausgehende Netzwerkscans und ähnliches. Damit ein menschlicher Analyst, beispielsweise Personal zur Anlagenüberwachung, auf die gemeldeten Ereignisse richtig reagieren kann, ist eine Kategorisierung in gutartige oder bösartige Ereignisse notwendig. Obgleich typische Sicherheitsereignismanagement- und Sicherheitsinformationsmanagementsysteme häufig Algorithmen für eine solche Kategorisierung implementieren, ist eine eindeutige Zuordnung allein aufgrund der vorhandenen Daten in vielen Fällen nicht möglich. In anderen Fällen kommt es zur fehlerhaften Zuordnung gutartiger Ereignisse als bösartig oder umgekehrt, sogenannte "false-positive" Ereignisse oder "false-negative" Ereignisse.

Die US 2003/0097617 A1 beschreibt ein Verfahren, bei dem ein Agent auf einer Client-Vorrichtung Ereignisse, wie beispielsweise Störungs- und Fehlermeldungen, überwacht. Werden solche Ereignisse detektiert, sammelt der Agent dazugehörige Information und sendet diese an einen Server. Der Server klassifiziert die Daten in Kategorien und generiert Wahrscheinlichkeitswerte für jede Kategorie. Überschreiten die Wahrscheinlichkeitswerte einer Kategorie einen Schwellwert, sendet der Server eine Nachricht mit Kategorie-spezifischer Lösungsinformation an den Client. Kann keine treffende Kategorie gefunden werden, wird dies ebenfalls in einer Nachricht an den Client gemeldet, siehe letzte drei Zeilen der Zusammenfassung. Basierend auf der gemeldeten Fehlerkategorie können dezidierte Maßnahmen in der Rechenvorrichtung eingeleitet werden.

Die US 2009/0164522 A1 offenbart, dass Software-Agenten zum Sammeln von Daten für forensische Untersuchungen verwendet werden. Dabei können aber nur Agenten aus bereits auf der Rechenvorrichtung vorhandenen Agenten ausgewählt werden. Insbesondere muss ein Nutzer beim Agenten die Datenelemente auswählen, die gesammelt werden sollen und entsprechende Kommandos an den Agenten übermitteln.

Der Artikel von Rodrigo Chandia et al: "Security Strategies for SCADA networks" in: "Critical Infrastructure Protection", 1. Januar 2007, Springer, US, Boston, MA, Bd. 253, Seiten 117-131,DOI: 10.1007/978-0-387-75462-8 9, beschreibt ein forensisches System zum Sammeln von SCADA Netzverkehr und dessen Analyse. Das System unterstützt eine post mortem Analyse von Sicherheitsangriffen sowie die Überwachung des Prozessverhaltens zur Optimierung der gesteuerten Anlage.

In Fällen, in denen eine eindeutige Zuordnung nicht möglich ist, sind zeitaufwendige Folgeuntersuchungen, wie z.B. eine manuelle forensische Untersuchung der betroffenen Rechenvorrichtung notwendig. Diese können typischerweise nicht im Sicherheitsereignis- und Sicherheitsinformationsmanagementsystem selbst stattfinden und erfordern unter Umständen besonderes Fachwissen.

Ist keine eindeutige Zuordnung eines sicherheitsrelevanten Ereignisses in eine Gefahrenkategorie möglich, wird derzeit beispielsweise auf eine Kategorisierung der Sicherheitsereignisse generell verzichtet, nicht-klassifizierbare Ereignisse, auch under-reporting genannt, unterdrückt oder eine unscharfe Kategorisierung durch ein Bewertungssystem, beispielsweise durch niedrige-, mittlere-, hohe-Relevanz vorgenommen. Eine solche nicht eindeutige Klassifizierung kommt häufig dadurch zustande, dass nicht genügend Information vorhanden ist, um das sicherheitsrelevante Ereignis genauer analysieren zu können.

Es ist somit die Aufgabe der vorliegenden Erfindung, die Fehlerrate bei der Einordnung bzw. Kategorisierung von Sicherheitsereignissen in verteilten Rechnerinfrastrukturen zu verbessern. Insbesondere soll dies auch bei Rechenvorrichtungen mit geringer Fähigkeit zur Datensammlung verbessert werden.

Die Aufgabe wird durch die in den unabhängigen Patentansprüchen beschriebenen Maßnahmen gelöst. In den Unteransprüchen sind vorteilhafte Weiterbildungen der Erfindung dargestellt.

In dem erfindungsgemäßen System zur Gewinnung und Analyse von forensischen Daten in einer verteilten Rechnerinfrastruktur mit mehreren Rechenvorrichtungen und mindestens einer Überwachungseinheit, die über ein Kommunikationsnetz miteinander verbunden sind, ist jede Rechenvorrichtung derart ausgebildet, Sicherheitsereignisse zu detektieren und an die Überwachungseinheit zu senden, und die Überwachungseinheit ist derart ausgebildet, die empfangenen Sicherheitsereignisse auszuwerten und einer Gefahrenkategorie zuzuweisen, wobei bei mangelnder Information zur Zuweisung einer Gefahrenkategorie die Rechenvorrichtung derart ausgebildet ist, Anweisungen zum Sammeln von zusätzlichen forensischen Daten zu empfangen und die zusätzlichen Daten an die Überwachungseinheit zu senden. Die Überwachungseinheit ist derart ausgebildet, Anweisungen zum Sammeln zusätzlicher Daten an die Rechenvor¬richtung zu übermitteln und nach Empfang der ausgewerteten zusätzlichen Daten diese zum erneuten Bewerten und Zuweisen einer Gefahrenkategorie zu verwenden.

Dies hat den Vorteil, dass nun zusätzliche forensische Daten in der Rechenvorrichtung ermittelt und der Überwachungseinheit zur Verfügung gestellt werden. Über diese zusätzlichen forensischen Daten kann eine erneute Auswertung und Kategorisierung vorgenommen werden. Die Fehlerrate bei der Kategorisierung der Sicherheitsereignisse wird dabei erheblich reduziert.

Des Weiteren umfasst das erfindungsgemäße System eine Analyseeinheit, die derart ausgebildet ist, einen Software-Agenten an die Rechenvorrichtung zu übermitteln, wobei der Software-Agent derart ausgebildet ist, zusätzliche forensische Daten in der Rechenvorrichtung zu ermitteln und diese an die Analyseeinheit zu senden.

Dies hat den Vorteil, dass die Rechenvorrichtungen keine eigenen Vorrichtungen oder Einheiten zur Sammlung von zusätzlichen Daten bereitstellen müssen. Herkömmliche bereits im Einsatz befindliche Rechenvorrichtungen können in dem erfindungsgemäßen System verbessert überwacht werden. Eine kostenaufwendige Nachrüstung von Rechenvorrichtungen mit einer Komponente zum Sammeln von zusätzlichen Daten ist nicht notwendig. Die Rechenvorrichtungen werden nur temporär durch den Software-Agenten belastet.

In einer vorteilhaften Weiterbildung wertet die Analyseeinheit die zusätzlichen, gesammelten Daten aus.

Dies hat den Vorteil, dass die Gewinnung und zumindest die Vorauswertung der zusätzlichen, gesammelten Daten unabhängig von einem bereits vorhandenen System ablaufen. Es sind lediglich geringfügige Anpassungen vorzunehmen. Die Überwachungseinheit erhält zwar zusätzliche Daten, kann diese aber in gewohnter Weise bewerten und zur Zuweisung einer Gefahrenkategorie heranziehen. Diese Analyseeinheit kann als eigenständige Einheit oder als funktionelle Einheit in der Überwachungseinheit ausgebildet sein und somit flexibel in bestehende Systeme integriert werden.

In einer vorteilhaften Weiterbildung des erfindungsgemäßen Systems sammelt der Software-Agent abhängig von der Art der in der Überwachungseinheit bewerteten Sicherheitsereignisse unterschiedliche zusätzliche Daten in der Rechenvorrichtung.

Dies hat den Vorteil, dass spezifisch auf die Art des in der Überwachungseinheit bewerteten Sicherheitsereignisses besonders relevante zusätzliche Daten gesammelt werden. Beispielsweise kann bei einem einfachen bzw. bei mehrfach fehlgeschlagenen Log-in Versuchen Information über die Adresse oder den Aufenthaltsort der Komponente eruiert werden, die die Log-in Versuche initiiert hat.

In einer vorteilhaften Ausgestaltung des erfindungsgemäßen Systems ist die Überwachungseinheit derart ausgebildet, das Bewerten eines einzelnen Sicherheitsereignisses durch Zuweisen eines Gewichtungsfaktors abhängig von der Relevanz des Sicherheitsereignisses durchzuführen.

Somit wird eine Einschätzung eines Sicherheitsereignisses bezüglich der Relevanz des gemeldeten Sicherheitsereignisses durchgeführt. Es kann somit stärker zwischen den einzelnen gemeldeten Sicherheitsereignissen differenziert werden.

In einer Ausführungsvariante ist die Überwachungseinheit derart ausgebildet, einem oder mehreren Sicherheitsereignissen eine bestimmte Gefahrenkategorie zuzuweisen, wenn die Summe der Gewichtungsfaktoren der einzelnen Sicherheitsereignisse einen vorgegebenen Schwellwert überschreitet.

Durch die Bewertung mehrerer Sicherheitsereignisse erfolgt eine fundierte Einschätzung und es können Fehleinschätzungen aufgrund von sporadisch auftretenden Sicherheitsereignissen reduziert werden.

In einer vorteilhaften Ausführungsform ist der Software-Agent derart ausgebildet, Metadaten von Dateien und/oder Einträge in einem Register für Konfigurationsdaten und/oder Protokolleinträge eines Anti-Virus-Programms in der Rechenvorrichtung als zusätzliche Daten zu sammeln.

Die genannten Daten enthalten eine Vielzahl von Informationen, wie Speicherdatum bzw. Speicher-Uhrzeit, Größe der Datei, Art der Datei sowie Hinweise über ein Kompromittieren der Rechenvorrichtung durch Viren etc., die eine genauere Einschätzung eines Sicherheitsereignisses ermöglichen.

In einer vorteilhaften Ausführungsform übermittelt der Software-Agent die zusätzlichen Daten in komprimierter Form an die Analyseeinheit.

Dies reduziert die benötigte Bandbreite für Übertragung der nachgeforderten bzw. nachgelieferten Daten und belastet somit das Kommunikationsnetz nur geringfügig.

Das erfindungsgemäße Verfahren zur Gewinnung und Analyse von forensischen Daten in einer verteilten Rechnerinfrastruktur mit mehreren Rechenvorrichtungen und mindestens einer Überwachungseinheit, die über ein Kommunikationsnetz miteinander verbunden sind, weist nachfolgend genannte Verfahrensschritte auf. Der erste Verfahrensschritt ist das Detektieren von Sicherheitsereignissen in der Rechenvorrichtung und das Übermitteln der Sicherheitsereignisse an die Überwachungseinheit. Es schließen sich die Verfahrensschritte des Bewertens der einzelnen Sicherheitsereignisse und das Zuweisen einer Gefahrenkategorie in der Überwachungseinheit an. Reicht die vorhandene Information bzw. die vorhandenen Sicherereignisse nicht zur Zuweisung einer Gefahrenkategorie aus, werden zusätzlich Daten von der Rechenvorrichtung angefordert. Die zusätzlich gesammelten Daten werden anhand sicherheitstechnischer Aspekte ausgewertet und die ausgewerteten Daten werden an die Überwachungseinheit übertragen. Dort werden die Sicherheitsereignisse und die ausgewerteten zusätzlichen Daten erneut bewertet und eine Gefahrenkategorie wird zugewiesen.

Somit werden in Fällen, in denen eine eindeutige Zuordnung einer Gefahrenkategorie nicht möglich ist, automatisch weitere sicherheitsrelevante Daten in der betroffenen Rechenvorrichtung oder auch anderen relevanten Rechenvorrichtungen gesammelt und zur Bewertung und Kategorisierung weiter ausgewertet und verwendet. Somit kann die Anzahl von Fehlzuordnungen von Gefahrenkategorien reduziert werden und eine Manipulation der verteilten Recheninfrastruktur wie z.B. einer Industrieanlage erkannt werden.

In einer vorteilhaften Variante des erfindungsgemäßen Verfahrens erfolgt das Bewerten eines einzelnen Sicherheitsereignisses durch Zuweisen eines Gewichtungsfaktors abhängig von der Relevanz des Sicherheitsereignisses.

In einer weiteren Variante wird einem oder mehreren Sicherheitsereignissen eine bestimmte Gefahrenkategorie zugewiesen, wenn die Summe der Gewichtungsfaktoren der einzelnen Sicherheitsereignisse einen vorgegebenen Schwellwert überschreitet.

Somit wird die Einschätzung und Kategorisierung von Sicherheitsereignissen bezüglich der Relevanz unterschiedlich bewertet und möglichst auf mehrere Sicherheitsereignisse gestützt. Somit wird eine Fehleinschätzung der Sicherheitsereignisse reduziert.

In einer vorteilhaften Ausführungsform des Verfahrens wird einem oder mehreren Sicherheitsereignissen eine bestimmte Gefahrenkategorie zugewiesen, wenn zusätzlich vorgegebene Bedingungen erfüllt sind.

Dadurch können zusätzliche für die Einschätzung der Sicherheitsereignisse wichtige Randbedingungen abgeprüft werden. Somit wird auch sichergestellt, dass die zur Verfügung stehenden Ressourcen, wie beispielsweise die Bandbreite des Kommunikationsnetzes bzw. die Prozessorleistung der einzelnen Rechenvorrichtungen bzw. der Überwachungseinheit effektiv eingesetzt und nicht überlastet werden.

In einer vorteilhaften Ausführungsform des erfindungsgemäßen Verfahrens werden unterschiedliche zusätzliche Daten abhängig von der Art der in der Überwachungseinheit bewerteten Sicherheitsereignisse in der Rechenvorrichtung gesammelt.

Dadurch kann die Art der zusätzlich zu sammelnden Daten in der Rechenvorrichtung auf solche Daten beschränkt werden, die für das bewertete Sicherheitsereignis die größte Relevanz haben. Somit wird die benötigte Bandbreite zum Übertragen der zusätzlichen Daten reduziert und die Prozessorleistung in der Analyseeinheit reduziert. Eine Analyse kann dadurch schneller und effektiver durchgeführt werden.

In einer vorteilhaften Ausführungsform werden die zusätzlich gesammelten Daten in komprimierter Form übertragen.

Auch dies hat den Vorteil, den Normalbetrieb der verteilten Infrastruktur und insbesondere des Kommunikationsnetzes möglichst wenig zu belasten.

Des Weiteren wird ein Computerprogrammprodukt mit Programmbefehlen zur Durchführung des beschriebenen Verfahrens beansprucht.

Ausführungsbeispiele des erfindungsgemäßen Systems bzw. des erfindungsgemäßen Verfahrens sind in den Zeichnungen beispielhaft dargestellt und werden anhand der nachfolgenden Beschreibung näher erläutert. Es zeigen:
- Figur 1: ein Ausführungsbeispiel eines erfindungsgemäßen Systems zur Gewinnung und Analyse zusätzlicher forensischer Daten in einer verteilten Rechnerinfrastruktur, und
- Figur 2: ein Ausführungsbeispiel des erfindungsgemäßen Verfahrens dargestellt in Form eines Flussdiagramms.

Einander entsprechende Teile sind in allen Figuren mit den gleichen Bezugszeichen versehen.

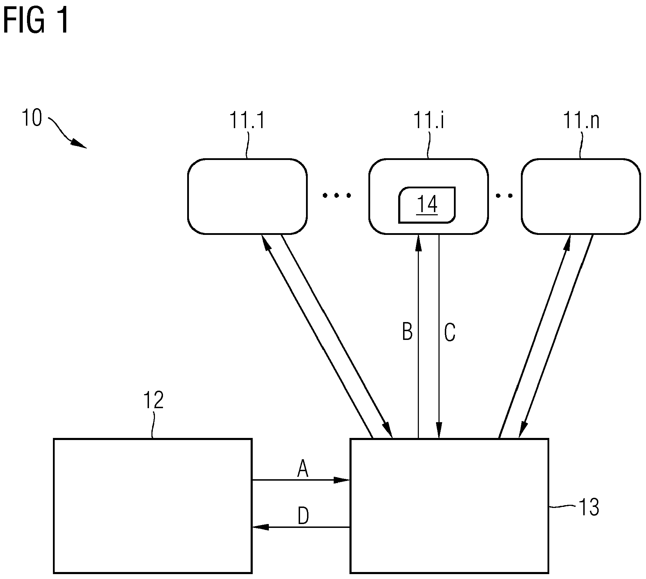

Figur 1 zeigt in schematischer Darstellung ein Ausführungsbeispiel eines erfindungsgemäßen Systems, in dem Rechenvorrichtungen 11.1, ..., 11.i, ..., 11.n sowie eine Überwachungseinheit 12, und eine Analyseeinheit 13 durch ein nicht dargestelltes Kommunikationsnetz miteinander verbunden sind. Die Rechenvorrichtungen 11.1, ..., 11.i, ..., 11.n können beispielsweise einzelne Feldgeräte in einer Automatisierungsanlage oder Komponenten einer Energieverteilungsanlage oder einer sonstigen Industrieanlage sein. Die Überwachungseinheit 12 ist derart ausgebildet, Sicherheitsereignisse, die in jeder der Rechenvorrichtung 11.1, ..., 11.n detektiert wurden und an die Überwachungseinheit 12 geschickt wurde, zu speichern, zu verwalten und durch eine Analyse der Sicherheitsereignisse sicherheitskritische Ereignisse zu erkennen und zu melden.

Typische Beispiele für Sicherheitsereignisse sind fehlgeschlagene Anmeldeversuche, Verbindungen von einem Rechner zu bösartigen oder verdächtigen Websites oder auch von einer Rechenvorrichtung ausgehende Netzwerkscans.

Da oftmals die Bewertung eines oder mehrerer in der Überwachungseinheit anfallenden Sicherheitsereignisse nicht ausreicht, um ein sicherheitskritisches Ereignisse zu identifizieren bzw. diesem Ereignis eine Gefahrenkategorie zuzuweisen, ist die Überwachungseinheit 12 derart ausgebildet, bei mangelnder Information zur Zuweisung einer Gefahrenkategorie eine Anweisung an die Rechenvorrichtung, beispielsweise Rechenvorrichtung 11.i zu senden, die das Sammeln von zusätzlichen forensischen Daten anfordert. Dazu sendet die Überwachungseinheit 12 eine Anforderungsnachricht A beispielsweise über eine Analyseeinheit 13. Die Anforderungsnachricht A kann beispielsweise Parameter umfassen, die den Typ oder mehrere Typen von Daten angeben, die basierend auf den bisherigen detektierten und bewerteten Sicherheitsereignissen zur weiteren Bewertung des Sicherheitsereignisses gesammelt werden sollen.

Die Analyseeinheit 13 übermittelt daraufhin einen entsprechenden Software-Agenten 14 in einer Nachricht B an eine oder auch mehrere Rechenvorrichtungen 11.i. Der Software-Agent 14 wird in der oder den Rechenvorrichtungen 11.i installiert und aktiviert, so dass dieser selbständig die gewünschten Daten in der Rechenvorrichtung 11.i sammelt. Der Software-Agent 14 kann dabei weitere Parameter oder Nebenbedingungen ausführen, beispielsweise über eine vorbestimmte Zeitdauer die angeforderten Daten zu sammeln, oder auch Daten eines vorgegebenen Typs oder mehrerer vorgegebener Typen, wie beispielsweise Metadaten von Dateien und/oder Einträge in einem Register für Konfigurationsdaten und/oder Protokolleinträge eines Anti- Virus-Programms in der Rechenvorrichtung 11.i zu sammeln.

Die vom Software-Agenten 14 gesammelten zusätzlichen Daten werden dann an die Analyseeinheit 13 in einer oder mehrerer Übertragungen C gesendet. Die gesammelten Daten können dabei vom Software-Agenten 14 komprimiert werden, so dass die Bandbreite zur Übertragung dieser zusätzlich gesammelten Daten reduziert wird.

In der Analyseeinheit 13 werden diese zusätzlich gesammelten Daten bearbeitet und optional vorausgewertet. Anschließend werden die bearbeiteten Daten in der Übertragung D an die Überwachungseinheit 12 gesendet. Dort findet eine erneute Bewertung der einzelnen Sicherheitsereignisse unter Berücksichtigung der zusätzlich gesammelten Daten bzw. der verarbeiteten gesammelten Daten statt. Beispielsweise werden die Sicherheitsereignisse sowie die bearbeiteten zusätzlich gesammelten Daten durch Zuweisung eines Gewichtungsfaktors abhängig von ihrer Relevanz bewertet. Überschreitet die Summe der Gewichtungsfaktoren der einzelnen Sicherheitsereignisse und der zusätzlich gesammelten Daten einen vorgegebenen Schwellwert, so wird ihnen eine bestimmte Gefahrenkategorie zugewiesen. Diese Gefahrenkategorie wird nun beispielsweise an eine Betriebseinheit bzw. direkt durch ein Signal an Betriebspersonal gemeldet. Diese können abhängig von der Art der Gefahrenkategorie weitere Maßnahmen ergreifen, wie beispielsweise eine weitere Analyse durchführen, bestimmte Netzübergänge zu sperren, etc.

Durch die Verwendung zusätzlicher gesammelter Daten zur Kategorisierung des Sicherheitsereignisses kann die Qualität der Kategorisierung substantiell gesteigert werden. Dadurch werden Folgeaufwände, wie beispielsweise eine manuelle Untersuchung minimiert oder auch Sicherheitsdefizite durch false-negative Kategorisierung reduziert.

Durch die Verwendung eines Software-Agenten 14 ist es möglich, zusätzliche Daten in einer Rechenvorrichtung 11.i zu sammeln, ohne dass die Rechenvorrichtung 11.i selbst diese Funktionalität vorsieht. Es können somit Daten auch in inhomogenen verteilten Rechnerinfrastrukturen gesammelt werden, die Rechenvorrichtungen unterschiedlichster Funktionalität umfassen.

Die Analyseeinheit 13 kann, wie in Figur 1 dargestellt, als eigenständige Komponente ausgebildet sein. Sie kann aber auch als integrierte Funktionalität beispielsweise in einer Überwachungseinheit 12 ausgebildet sein. Die Analyseeinheit 13 verarbeitet automatisiert die vom Software-Agenten 14 übertragenen gesammelten Daten und filtert beispielsweise die für ein bestimmtes Sicherheitsereignis relevanten Daten heraus oder erzeugt daraus resultierende zusätzliche Sicherheitsereignisse.

Optional können nochmals zusätzliche Daten von der Rechenvorrichtung 11.i oder auch von anderen Rechenvorrichtungen, die einen Bezug zum bereits detektierten Sicherheitsereignis haben, zur Sammlung weiterer Daten aufgefordert werden. Dies erfolgt dann über die bereits beschriebenen Nachrichten. Die forensische Datensammlung und Analyse erfolgt somit automatisch. Die zusätzlich ausgewerteten gesammelten Daten werden in die Bewertung und Kategorisierung der Sicherheitsereignisse in der Überwachungseinheit 12 integriert und beispielsweise über eine Ausgabeeinheit, beispielsweise durch Anzeige einer Fehlermeldung und/oder einer Übersicht der ermittelten Sicherheitsereignisse, einem menschlichen Analysten zugänglich gemacht. Dadurch wird die Bearbeitung eines Sicherheitsvorfalls, verglichen mit einer manuellen Vorgehensweise, deutlich beschleunigt und der menschliche Analyst entlastet.

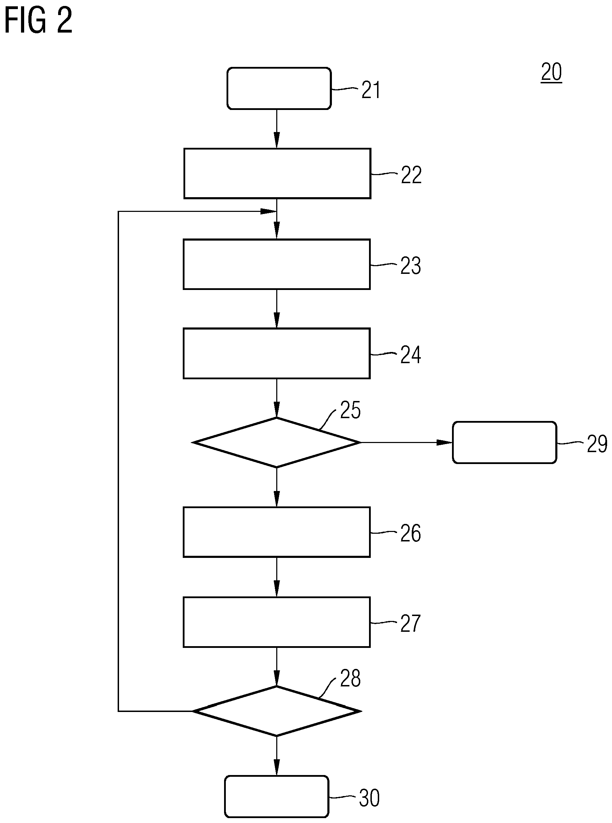

In Figur 2 sind die einzelnen Verfahrensschritte des erfindungsgemäßen Verfahrens in einem Flussdiagramm 20 aufgezeigt.

Im Ausgangszustand 21 liegt eine verteilte Rechnerinfrastruktur vor, in der jede einzelne Rechenvorrichtung fortlaufend vorbestimmte Typen von Ereignissen bei ihrem Auftreten protokolliert. Werden im Verfahrensschritt 22 ein oder mehrere Sicherheitsereignisse in eine Rechenvorrichtung 11.i detektiert, so werden diese an die Überwachungseinheit 12 übermittelt. Im Verfahrensschritt 23 werden die einzelnen übermittelten Sicherheitsereignisse in der Überwachungseinheit 12 bewertet, indem jedem Sicherheitsereignis ein Gewichtungsfaktor entsprechend der Relevanz aus sicherheitstechnischer Sicht zugeordnet wird. Im Verfahrensschritt 24 werden nun ein bzw. mehrere bewertete, also gewichtete Sicherheitsereignisse gemeinsam betrachtet. Beispielsweise werden alle Gewichtungsfaktoren der betrachteten Sicherheitsereignisse aufsummiert. Bei Überschreitung eines vorgegebenen Schwellwertes wird eine bestimmte Gefahrenkategorie zugewiesen. Zur Zuweisung einer Gefahrenkategorie kann die Erfüllung weiterer Bedingungen als notwendig erfüllt gefordert sein.

Im Verfahrensschritt 25 wird nun überprüft, ob eine Gefahrenkategorie zugeordnet werden konnte. Ist dies der Fall, so wird die Gefahrenkategorie im Schritt 29 ausgegeben bzw. gemeldet. Damit ist die Analyse einer auffälligen Situation, die beispielsweise durch ein Kompromittieren einzelner oder aller Komponenten der verteilten Rechnerinfrastruktur 11.1, ..., 11.i, ..., 11.n entsteht, abgeschlossen.

Wird im Verfahrensschritt 25 festgestellt, dass entweder der Schwellwert zur Zuweisung einer Gefahrenkategorie noch nicht erreicht ist oder zusätzliche Bedingungen zur Zuweisung einer Gefahrenkategorie noch nicht erfüllt sind, werden zusätzliche Daten zur Bewertung der einzelnen Sicherheitsereignisse angefordert. Dies kann entweder bei der einen Rechenvorrichtung 11.i, die relevante Sicherheitsereignisse detektiert und gemeldet hat, angefordert werden. Es können aber auch weitere Rechenvorrichtungen 11.1, ..., 11.i, ..., 11.n aufgefordert werden, zusätzliche Daten, beispielsweise spezielle Daten, die im Zusammenhang mit einer bestimmten Gefahrenkategorie stehen, zu sammeln und zur Auswertung an eine Analyseeinheit 13 und weiter zur Überwachungseinheit 12 zu übertragen. Eine erste Bearbeitung und Auswertung der zusätzlich gesammelten Daten findet im Verfahrensschritt 27 in der Analyseeinheit 13 statt.

Im Verfahrensschritt wird überprüft, wie häufig bereits eine Nachforderung von zusätzlichen Daten erfolgt ist. Ist eine Maximalanzahl noch nicht überschritten, werden die resultierenden Daten an die Überwachungseinheit 12 gesendet, die die zusätzlich gesammelten Daten entweder alleine oder nochmals mit den bereits bewerteten einzelnen Sicherheitsereignissen in Verfahrensschritt 23 bewertet, und in Schritt 24 eine Zuweisung einer Gefahrenkategorie vornimmt.

Kann nach Überschreitung des im Verfahrensschritt 28 vorgegebene Maximalwertes noch immer keine Gefahrenkategorie zugeordnet werden, so wird keine weitere Anforderung für zusätzliche Daten mehr erzeugt und eine entsprechende Meldung im Verfahrensschritt 30 z.B. an Analysepersonal bzw. eine entsprechende Ausgabeeinheit weitergeleitet und der Ablauf beendet.

Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. System zur Gewinnung und Analyse von forensischen Daten in einer verteilten Rechnerinfrastruktur mit mehreren Rechenvorrichtungen (11.1, ..,11.n) und mindestens einer Überwachungseinheit (12), die über ein Kommunikationsnetz miteinander verbunden sind, und jede Rechenvorrichtung (11.1, ..,11.n) derart ausgebildet ist Sicherheitsereignisse zu detektieren und an die Überwachungseinheit (12) zu senden, und die Überwachungseinheit (12) derart ausgebildet ist, die empfangenen Sicherheitsereignissen zu bewerten und eine Gefahrenkategorie zuzuweisen,
wobei bei mangelnder Information zur Zuweisung einer Gefahrenkategorie die Rechenvorrichtung (11.1, ..,11.n) derart ausgebildet ist, Anweisungen zum Sammeln von zusätzlichen forensischen Daten zu empfangen und die gesammelten, zusätzlichen Daten an die Überwachungseinheit (12) zu senden, die Überwachungseinheit (12) derart ausgebildet ist Anweisung zum Sammeln zusätzlicher Daten an die Rechenvorrichtung (11.1, ..,11.n) zu übermitteln, und nach Empfang der gesammelten, zusätzlichen Daten diese auszuwerten und zum erneuten Bewerten und Zuweisen einer Gefahrenkategorie zu verwenden,
wobei das System eine Analyseeinheit (13) umfasst, die derart ausgebildet ist, einen Software-Agenten (14) an die Rechenvorrichtung (11.1, ..,11.n) zu übermitteln, und der Software-Agent (14) derart ausgebildet ist zusätzliche Daten in der Rechenvorrichtung (11.1, ..,11.n) zu ermitteln und an die Analyseeinheit (13) zu senden.

2. System nach Anspruch 1, wobei die Analyseeinheit (13) die zusätzlichen, gesammelten Daten auswertet.

3. System nach einem der vorangehenden Ansprüche , wobei der Software-Agent (14) derart konfiguriert ist, abhängig von der Art der in der Überwachungseinheit (12) bewerteten Sicherheitsereignisse unterschiedliche zusätzliche Daten in der Rechenvorrichtung (11.1, ..,11.n) zu sammeln.

4. System nach einem der vorangehenden Ansprüche, wobei der Software-Agent (14) derart ausgebildet ist, Metadaten von Dateien und/oder Einträge in einem Register für Konfigurationsdaten und/oder Protokolleinträge eines Anti-Virus-Programms in der Rechenvorrichtung (11.1, ..,11.n) als zusätzliche Daten zu sammeln.

5. System nach einem der vorangehenden Ansprüche, wobei der Software-Agent (14) die zusätzlichen Daten in komprimierter Form an die Analyseeinheit (13) übermittelt.

6. System nach einem der Ansprüche 1 bis 5, wobei die Überwachungseinheit (12) derart ausgebildet ist, das Bewerten eines einzelnen Sicherheitsereignisses durch Zuweisen eines Gewichtungsfaktors abhängig von der Relevanz des Sicherheitsereignisses durchzuführen.

7. System nach Anspruch 6, wobei die Überwachungseinheit (12) derart ausgebildet ist, einem oder mehreren Sicherheitsereignissen eine bestimmte Gefahrenkategorie zuzuweisen, wenn die Summe der Gewichtungsfaktoren der einzelnen Sicherheitsereignisse einen vorgegebenen Schwellwert überschreitet und/oder vorbestimmte Bedingungen erfüllt sind.

8. Verfahren zur Gewinnung und Analyse von forensischen Daten in einer verteilten Rechnerinfrastruktur mit mehreren Rechenvorrichtungen (11.1, ..,11.n) und mindestens einer Überwachungseinheit (12), die über ein Kommunikationsnetz miteinander verbunden sind, mit den Verfahrensschritten:
- Detektieren (22) von Sicherheitsereignissen in einer Rechenvorrichtung (11.1, ..,11.n) und Übermitteln an die Überwachungseinheit (12),
- Bewerten (23) der einzelnen Sicherheitsereignisse, und
- Zuweisen (24) einer Gefahrenkategorie in der Überwachungseinheit (12), wobei bei mangelnder Information zur Zuweisung einer Gefahrenkategorie
- zusätzliche Daten von mindestens einer Rechenvorrichtung (11.1, ..,11.n) angefordert werden (26),
- die zusätzlichen Daten anhand sicherheitstechnischer Aspekte auswertet werden (27), und die ausgewerteten Daten an die Überwachungseinheit (12) übertragen werden, und
- die Sicherheitsereignisse und die ausgewerteten zusätzlichen Daten erneut bewertet (23) werden und eine Gefahrenkategorie zuwiesen wird (24),wobei ein Software-Agent (14) an die Rechenvorrichtung (11.1, ..,11.n) übermittelt wird, der die zusätzlichen Daten in der Rechenvorrichtung (11.1, ..,11.n) ermittelt und an die Analyseeinheit (13) sendet.

9. Verfahren nach Anspruch 8, wobei das Bewerten (23) eines einzelnen Sicherheitsereignisses durch Zuweisen eines Gewichtungsfaktors abhängig von der Relevanz des Sicherheitsereignisses erfolgt.

10. Verfahren nach Anspruch 9, wobei einem oder mehreren Sicherheitsereignissen eine bestimmte Gefahrenkategorie zugewiesen wird (24), wenn die Summe der Gewichtungsfaktoren der einzelnen Sicherheitsereignisse einen vorgegebenen Schwellwert überschreitet.

11. Verfahren nach Anspruch 10, wobei einem oder mehreren Sicherheitsereignissen eine bestimmte Gefahrenkategorie zugewiesen wird (24), wenn zusätzlich vorgegebene Bedingungen erfüllt sind.

12. Verfahren nach einem der Ansprüche 8 bis 11, wobei unterschiedliche zusätzliche Daten abhängig von der Art der in der Überwachungseinheit (12) bewerteten Sicherheitsereignisse in der Rechenvorrichtung (11.1, ..,11.n) gesammelt werden.

13. Verfahren nach einem der Ansprüche 8 bis 12, wobei die zusätzlichen gesammelten Daten in komprimierter Form übertragen werden.

14. Computerprogrammprodukt mit Programmbefehlen zur Durchführung des Verfahrens nach Anspruch 8 bis 13.

## Claims

1. System for obtaining and analyzing forensic data in a distributed computer infrastructure having multiple computation apparatuses (11.1, ..,11.n) and at least one monitoring unit (12), which are connected to one another via a communication network, and each computation apparatus (11.1, ..,11.n) is designed to detect security events and to send them to the monitoring unit (12), the monitoring unit (12) is designed to rate the received security events and to assign them a danger category,
wherein when there is insufficient information for assigning a danger category, the computation apparatus (11.1, ..,11.n) is designed to receive instructions for collecting additional forensic data and to send the collected, additional data to the monitoring unit (12), the monitoring unit (12) is designed to transmit instructions for collecting additional data to the computation apparatus (11.1, ..,11.n), and, following reception of the collected, additional data, to evaluate said data and to use them for fresh rating and assignment of a danger category, wherein the system comprises an analysis unit (13) that is designed to transmit a software agent (14) to the computation apparatus (11.1, ..,11.n), and the software agent (14) is designed to ascertain additional data in the computation apparatus (11.1, ..,11.n) and to send them to the analysis unit (13).

2. System according to Claim 1, wherein the analysis unit (13) evaluates the additional, collected data.

3. System according to either of the preceding claims, wherein the software agent (14) is configured to take the type of the security events rated in the monitoring unit (12) as a basis for collecting different additional data in the computation apparatus (11.1, ..,11.n).

4. System according to one of the preceding claims, wherein the software agent (14) is designed to collect metadata from files and/or entries in a register for configuration data and/or protocol entries from an antivirus program in the computation apparatus (11.1, ..,11.n) as additional data.

5. System according to one of the preceding claims, wherein the software agent (14) transmits the additional data to the analysis unit (13) in compressed form.

6. System according to one of Claims 1 to 5, wherein the monitoring unit (12) is designed to perform rating of an individual security event by assigning a weighting factor on the basis of the relevance of the security event.

7. System according to Claim 6, wherein the monitoring unit (12) is designed to assign a particular danger category to one or more security events if the sum of the weighting factors of the individual security events exceeds a prescribed threshold value and/or predetermined conditions are satisfied.

8. Method for obtaining and analyzing forensic data in a distributed computer infrastructure having multiple computation apparatuses (11.1, ..,11.n) and at least one monitoring unit (12), which are connected to one another via a communication network, having the method steps of:
- detection (22) of security events in a computation apparatus (11.1, ..,11.n) and transmission to the monitoring unit (12),
- rating (23) of the individual security events, and
- assigning (24) of a danger category in the monitoring unit (12), wherein when there is insufficient information for assigning a danger category,
- additional data are requested (26) from at least one computation apparatus (11.1, ..,11.n),
- the additional data are evaluated (27) on the basis of security-oriented aspects, and the evaluated data are transmitted to the monitoring unit (12), and
- the security events and the evaluated additional data are rated (23) afresh and a danger category is assigned (24), wherein a software agent (14) is transmitted to the computation apparatus (11.1, ..,11.n), which software agent ascertains the additional data in the computation apparatus (11.1, ..,11.n) and sends them to the analysis unit (13).

9. Method according to Claim 8, wherein an individual security event is rated (23) by assigning a weighting factor on the basis of the relevance of the security event.

10. Method according to Claim 9, wherein one or more security events is/are assigned (24) a particular danger category if the sum of the weighting factors of the individual security events exceeds a prescribed threshold value.

11. Method according to Claim 10, wherein one or more security events is/are assigned (24) a particular danger category if additionally prescribed conditions are satisfied.

12. Method according to one of Claims 8 to 11, wherein different additional data are collected in the computation apparatus (11.1, ..,11.n) on the basis of the type of the security events rated in the monitoring unit (12).

13. Method according to one of Claims 8 to 12, wherein the additional collected data are transmitted in compressed form.

14. Computer program product having program commands for performing the method according to Claims 8 to 13.

## Revendications

1. Système d'obtention et d'analyse de données forensiques dans une infrastructure informatique distribuée comportant plusieurs dispositifs informatiques (11.1, ... , 11.n) et au moins une unité de surveillance (12) reliés entre eux via un réseau de communication, chaque dispositif informatique (11.1, ... , 11.n) étant conçu de manière à détecter des événements de sécurité et à les envoyer à l'unité de surveillance (12), et l'unité de surveillance (12) étant conçue pour évaluer les événements de sécurité reçus et les affecter à une catégorie de risques,
en l'absence d'information pour l'affectation à une catégorie de risques, le dispositif informatique (11.1, ..., 11.n) étant conçu de manière à recevoir des instructions de collecte de données forensiques supplémentaires et à envoyer les données supplémentaires collectées à l'unité de surveillance (12), l'unité de surveillance (12) étant conçue pour transmettre l'instruction de collecter des données supplémentaires au dispositif informatique (11.1, ..., 11.n) et pour, après la réception des données supplémentaires collectées, évaluer celles-ci et les utiliser pour une nouvelle évaluation et affectation à une catégorie de risques,
le système comprenant une unité d'analyse (13) qui est conçue de manière à transmettre un agent logiciel (14) au dispositif informatique (11.1, ..., 11.n) et l'agent logiciel (14) étant conçu de manière à transmettre des données supplémentaires dans le dispositif informatique (11.1, ..., 11.n) et à les envoyer à l'unité d'analyse (13).

2. Système selon la revendication 1, l'unité d'analyse (13) évaluant les données collectées supplémentaires.

3. Système selon l'une des revendications précédentes, l'agent logiciel (14) étant configuré de manière à collecter différentes données supplémentaires dans le dispositif informatique (11.1, ..., 11.n) en fonction du type des événements de sécurité évalués dans l'unité de surveillance (12).

4. Système selon l'une des revendications précédentes, l'agent logiciel (14) étant conçu pour collecter, en tant que données supplémentaires, des métadonnées de fichiers et/ou d'entrées dans un registre de données de configuration et/ou d'entrées de protocole d'un programme antivirus dans le dispositif informatique (11.1, ..., 11.n).

5. Système selon l'une des revendications précédentes, l'agent logiciel (14) transmettant les données supplémentaires sous forme compressée à l'unité d'analyse (13).

6. Système selon l'une des revendications 1 à 5, l'unité de surveillance (12) étant conçue de manière à effectuer l'évaluation d'un événement de sécurité individuel par affectation d'un facteur de pondération en fonction de la pertinence de l'événement de sécurité.

7. Système selon la revendication 6, l'unité de surveillance (12) étant conçue pour affecter une catégorie de risques déterminée à un ou plusieurs événements de sécurité lorsque la somme des facteurs de pondération des événements de sécurité individuels dépasse une valeur seuil donnée et/ou lorsque des conditions prédéterminées sont remplies.

8. Procédé d'obtention et d'analyse de données forensiques dans une infrastructure informatique distribuée comportant plusieurs dispositifs informatiques (11.1, ..., 11.n) et au moins une unité de surveillance (12) reliés entre eux via un réseau de communication, chaque dispositif informatique, comportant les étapes suivantes :
- détection (22) d'événements de sécurité dans un dispositif informatique (11.1, ..., 11.n) et transmission à l'unité de surveillance (12),
- évaluation (23) des événements de sécurité individuels et
- affectation (24) d'une catégorie de risques dans l'unité de surveillance (12), en l'absence d'information pour l'affectation à une catégorie de risques,
- des données supplémentaires étant demandées (26) par au moins un dispositif informatique (11.1, ..., 11.n)
- les données supplémentaires étant évaluées (27) à l'aide d'aspects de technique de sécurité et les données évaluées étant transmises à l'unité de surveillance (12), et
- les événements de sécurité et les données supplémentaires évaluées étant de nouveau évalués (23) et une catégorie de risques étant affectée (24), un agent logiciel (14) étant transmis au dispositif informatique (11.1, ..., 11.n), lequel agent détermine les données supplémentaires dans le dispositif informatique (11.1, ..., 11.n) et les envoie à l'unité d'analyse (13).

9. Procédé selon la revendication 8, l'évaluation (23) d'un événement de sécurité individuel se faisant par affectation d'un facteur de pondération en fonction de la pertinence de l'événement de sécurité.

10. Procédé selon la revendication 9, une catégorie de risques déterminée étant affectée (24) à un ou plusieurs événements de sécurité lorsque la somme des facteurs de pondération des événements de sécurité individuels dépasse une valeur seuil donnée.

11. Procédé selon la revendication 10, une catégorie de risques déterminée étant affectée (24) à un ou plusieurs événements de sécurité lorsque des conditions prédéterminées sont en outre remplies.

12. Procédé selon l'une des revendications 8 à 11, différentes données supplémentaires étant collectées dans le dispositif informatique (11.1, ..., 11.n) en fonction du type des événements de sécurité évalués dans l'unité de surveillance (12).

13. Procédé selon l'une des revendications 8 à 12, les données collectées supplémentaires étant transmises sous forme compressée.

14. Produit de programme informatique avec des ordres de programme pour exécuter le procédé selon la revendication 8 à 13.
